Europäisches Patentamt

European Patent Office

Office européen des brevets

(11) Veröffentlichungsnummer: **0 409 366 A2**

# EUROPÄISCHE PATENTANMELDUNG

(21) Anmeldenummer: **90250180.8**

(22) Anmeldetag: **17.07.90**

(51) Int. Cl.⁵: **B65D 5/42**

(30) Priorität: **21.07.89 DE 8909035 U**

(43) Veröffentlichungstag der Anmeldung:
**23.01.91 Patentblatt 91/04**

(84) Benannte Vertragsstaaten:
**AT BE CH DE DK ES FR GB GR IT LI LU NL SE**

(71) Anmelder: **Europa Carton Aktiengesellschaft**
**Spitaler Strasse 11**
**D-2000 Hamburg 1(DE)**

(72) Erfinder: **Braasch, Karlheinz**
**Falkenburger Ring 5**
**D-2000 Hamburg 73(DE)**
Erfinder: **Behncke, Alwin**
**Baben Pfier 3**
**D-2000 Hamburg 65(DE)**
Erfinder: **Brauns, Max K**
**E. Howard-Weg 5 c**
**D-2000 Norderstedt(DE)**

(74) Vertreter: **Patentanwälte Wenzel & Kalkoffoff**
**Grubes Allee 26 Postfach 730466**
**D-2000 Hamburg 73(DE)**

(54) **Quaderförmige Verpackung aus faltbarem Material.**

(57) Eine quaderförmige Wellpappe-Verpackung (1) für zu einer Versandeinheit zusammengefaßtes Verpackungsgut (10) umfaßt ein Bodenteil (2) und ein Deckelteil (3) sowie an diesen beiden angelenkte Boden- und Deckelseitenwände (4 bzw. 5). Zur Verbesserung der Stabilität, Befüll-und Verschließbarkeit sowie der Möglichkeiten einer günstigen Präsentation des Gutes, einer einfachen Entsorgung und einer problemlosen Wiederverwendbarkeit ist das Bodenteil als trayartiger Einsatz und das Deckelteil mit das Bodenteil untergreifenden Stummelklappen (6) ausgebildet.

Fig.1B

Fig.2B

## QUADERFÖRMIGE VERPACKUNG AUS FALTBAREM MATERIAL

Die Erfindung betrifft eine quaderförmige Verpackung aus faltbarem Material wie Wellpappe, Pappe od.dgl. zum Verpacken von zu einer Versandeinheit zusammengefaßtem Einzelgut, wobei die Verpackung aus einem Bodenteil und aus einem durch das Bodenteil an einer Öffnungsseite im satten Sitz geschlossenen Deckelteil zusammengefügt ist, von denen das Bodenteil aus einem aufgerichteten Bodenzuschnitt mit an einem Bodenabschnitt über Falzlinien angelenkten Seitenwänden sowie mit diese verbindenden Ecklaschen und das Deckelteil aus einem zu einem kastenförmigen Teil aufgerichteten Deckelzuschnitt mit an einem Deckelabschnitt über Falzlinien angelenkten Seitenwänden bestehen.

Bekannte Verpackungen, die aus ineinander gesetzten Kartonteilen gebildet sind, sind für den Versand mit besonders bereitzuhaltenden Verschlußmitteln wie Klebebändern, Spannbändern, Umschnürungen, Schrumpffolien und/oder Aufreißfäden zusammengefügt. Dadurch ist ein schnelles und bequemes Schließen und Öffnen solcher Verpackungen behindert. Zumeist sind Schneidwerkzeuge als Hilfsmittel erforderlich, um den Verpackungsverschluß zu lösen. Es sind Verpackungen bekannt, in die das Verpakkungsgut aufnehmende Einsätze oder Trays aus Kunststoff eingesetzt sind. Abgesehen davon, daß aufwendige Verschlußmittel verwendet und entfernt werden müssen, können die Verpackungen nur relativ umständlich gehandhabt werden, indem im klemmenden Einsatz befindliche Verpackungsteile auseinandergeschoben und entschachtelt werden müssen. Die bekannten Verpackungen lassen nicht nur hinsichtlich ihrer Handhabung für Endverbraucher bzw. im Handel zu wünschen übrig, sondern auch zum Befüllen mit Verpackungsgut und zum Verschließen sind mehrere Schritte erforderlich, die sowohl bei maschineller als auch manueller Herrichtung der Verpackung arbeitsintensiv und damit kostenaufwendig sind. Die gesondert zu verwendenden Verschlußmittel bzw. separaten Füllgut-Einsatzteile bestehen aus gegenüber dem Material der Verpackung andersartigen Materialien wie insbesondere Kunststoff und Metall, so daß zum umweltfreundlichen Entsorgen nutzlos gewordener Verpackungen oder Verpakkungsteile eine besondere Sortierung verschiedener Packstoffe vorgesehen werden muß. Auch können die bekannten Verpackungen nicht oder nur durch erneutes Anbringen von aufwendig zu handhabenden Verschlußmitteln wiederverwendet werden.

Demgegenüber liegt der Erfindung die Aufgabe zugrunde, eine Verpackungs- oder Füllgut in einem Einsatz aufnehmende stabile Verpackung zu schaffen, die mit dem Einsatz aus nur einem Verpakkungsstoff gebildet sowie bequem befüllt bzw. verschlossen und auf einfache Weise unter Hervorbringen einer das Füllgut präsentierenden Regaloder Displayverpackung ohne Hilfsmittel geöffnet und anschließend umweltfreundlich entsorgt werden kann, wobei bei Bedarf auch eine problemlose Wiederverwendßarkeit gewährleistet sein soll.

Diese Aufgabe wird in Verbindung mit den Merkmalen der eingangs genannten Verpackung dadurch gelöst, daß das Bodenteil al das Einzelgut aufnehmender Einsatz in Form eines Trays od. dgl. ausgebildet ist und daß an der das Bodenteil aufnehmenden Öffnungsseite des Deckelteils an einander gegenüberliegenden Seitenwänden des Deckelzuschnitts über Falzlinien Verschlußklappen bildende Stummelklappen angelenkt sind, die unter Anlage an dem Bodenteil eine das Bodenteil zwischen sich aufnehmende Einfassung bilden. Mit der durch die Stummelklappen gebildeten Einfassung für das Bodenteil ist erreicht, daß mit den aus den beiden Zuschnitten aufgerichteten Verpackungsteilen eine das Bodenteil lage- und verschlußsicher aufnehmende Verpackungseinheit gebildet ist. Durch die die Stummelklappen anlenkenden Deckelseitenwände und die Stummelklappen selbst ist eine Aufnahme für das Bodenteil vorgesehen, die dieses zumindest in der Hauptsturzrichtung der Verpackung, d.h. bei stehender Verpackung nach Oben und nach unten, und zumindest an zwei einander gegenüberliegenden Verpackungsseitenwänden fixiert. Die Stummelklappen bilden das Bodenteil im Abstand zu dem Deckelabschnitt fixierende Verschlußleisten oder -arme und weisen die Eignung auf, daß sie ohne aufwendige Verbindungsmittel an dem Bodenteil in Klebe-, Haftund/oder Steckverbindung arretierbar und lösbar sind. Die Anlenkung der Stummelklappen an den einander gegenüberliegenden Deckelseitenwänden bildet zusammen mit diesen einen um die Deckelabschnitt-Falzlinien flügelartig schwenkbaren, außerhalb der Verpackung geführten Klammerverschluß, mittels dem das Deckelteil sowie das das Verpackungsgut aufnehmende Bodenteil leicht entweder maschinell oder manuell zusammenfügbar bzw. voneinander trennbar sind. Ein weiterer wesentlicher Vorteil besteht darin, daß das Bodenteil in doppelter Funktion als Verschlußteil der Versandverpackung sowie als das Verpackungsgut wie insbesondere stehende Teile, z.B. Dosen oder Flaschen, tragendes, eine selbständige Display-, Verkaufs- oder Regalverpackung bildendes Trayteil ausgebildet ist. Damit ist eine einfach insbesondere maschinell herstellbare und bequem handhabbare kombinierte Versand- und Regalverpackung erreicht.

Es ist möglich, daß das Deckelteil zwischen den die Stummelklappen anlenkenden Flügel-Deckelseitenwänden offen ist, so daß das Verpackungsgut sichtbar ist. Insbesondere bei einem in Standrichtung steifen Füllgut ist dennoch durch die Anlage des Deckelteilabschnitts an dem Füllgut eine im ganzen feste und stabile Verkaufseinheit erreicht. Hinsichtlich einer besondere Eigensteifigkeit aufweisenden allseitig geschlossenen Verpackung ist es zweckmäßig, daß der Deckelzuschnitt zwei Paar einander gegenüberliegender Seitenwände umfaßt, an die ebenfalls Stummelklappen angelenkt sein können. Die Festigkeit der Verpackung kann auch dadurch gesteigert werden, daß in Eckbereichen des Deckelzuschnitts an wenigstens einer Deckelseitenwand über Falzlinien Eckklappen angelenkt sind. Eine besondere Gestaltung der Erfindung besteht darin, daß der Deckelzuschnitt Eckklappen umfaßt, die zusammen mit den die Stummelklappen anlenkenden Deckelseitenwänden eine doppellagige Verpackungswand bilden. Bei erfindungsgemäßen Ausführungen mit zwei Paaren einander gegenüberliegender Seitenwände ist die Verpackung in der Kanten-/Wandhöhe des Bodenteils an zwei Seiten dreiwandig und an den beiden anderen Seiten zweiwandig ausgebildet. Bei einem Deckelzuschnitt aus Wellenmaterial wie vorzugsweise Wellpappe ist es besonders vorteilhaft, die doppellagige Verpackungswand mit sich kreuzenden Wellen zu bilden, indem die Eckklappen mit stehender Welle versehen sind, während die mit dieser in Kombination vorgesehene Seitenwand, die die Stummelklappe anlenkt, mit liegender Welle gebildet ist.

Gemäß einer Ausführungsform der Erfindung läßt sich Eigensteifigkeit der Verpackung besonders ausgeprägt dadurch erreichen, daß frei von Stummelklappen ausgebildete Deckelteil-Seitenwände und/oder gegebenenfalls vorgesehene Deckelteil-Eckklappen an der Innenseite der Bodenteil-Seitenwände satt anliegen und auf dem Bodenabschnitt wenigstens teilweise aufstehen.

Eine andere besondere Ausführungsform der Erfindung besteht darin, daß frei von Stummelklappen ausgebildete Deckelteil-Seitenwände und/oder gegebenenfalls vorgesehene Deckelteil-Eckklappen an der Außenseite der Bodenteilseitenwände satt anliegen. Vorzugsweise schließen die freien Kanten dieser Teile an der Deckelteil-Öffnungsseite in der Fläche des Bodenabschnitts ab. Bei der Ausführung der Verpackung mit doppellagiger Verpackungswand sind die Eckklappen an der Deckelteil-Öffnungsseite zwischen die Deckelteil-Seitenwand und die Bodenteil-Seitenwand geklemmt, und insbesondere eine entlang der Deckelteil-Seitenwand sich erstreckende Stummelklappe verdeckt die Fabrikkanten der Eckklappen, so daß eine sehr ansprechende, nach außen weitgehend glatt abgeschlossene Verpackung erreicht ist.

Hinsichtlich einer besonders guten Steifigkeit der Verpackung, einer sehr einfachen Einpassung bzw. Entnahme des Bodenteils in bzw. aus der Deckelteil-Öffnung und/oder einer spielfreien und damit festen Anlage der Verpackung an den Oberkanten des Füllguts ist vorgesehen, daß zwei einander gegenüberliegende, die Stummelklappen anlenkende Deckelseitenwände zu dem Bodenteil hin sich verjüngend ausgebildet sind, während die beiden anderen Deckelseitenwände zu dem Bodenteil hin sich verbreiternd ausgebildet sind. Derart konisch sich erweiternde bzw. verjüngende, an dem Deckelabschnitt angelenkte Teile sind bequem durch entsprechende Rill- oder Falzlinienstanzungen des Deckelzuschnitts realisiert.

Eine für das maschinelle Aufrichten der Verpackung besonders vorteilhafte und zudem eine sehr ausgeprägte Verschlußfestigkeit gewährleistende Gestaltung der erfindungsgemäßen Verpackung besteht darin, daß die Stummelklappen-Einfassung für das Bodenteil dadurch ausgebildet ist, daß die Stummelklappen längs des Randes der das Bodenteil aufnehmenden Deckelteil-Öffnungsseite angelenkt sind, wobei das Deckelteil das Bodenteil im Bereich der Öffnungsseite übergreift und die Stummelklappen außen an dem Bodenabschnitt des Bodenteils anliegen.

Eine zweckmäßige Ausführungsform der Erfindung besteht aber auch darin, daß die Stummelklappen-Einfassung für das Bodenteil dadurch ausgebildet ist, daß jede Stummelklappe im Bereich der Deckelteil-Öffnungsseite seitlich an der Deckelteil-Seitenwand angelenkt ist und an der Seitenwand des Bodenteils anliegt, wobei die die Stummelklappen anlenkenden Deckelteil-Seitenwände an der Seitenwand des Bodenteils anliegen.

Für die Ausführungsformen der erfindungsgemäßen Verpackung, bei denen die Stummelklappen vollständig außen an dem Bodenteil anliegen, besteht eine sehr vorteilhaf te erfindungsgemäße Gestaltung eines lösbaren Arretierverschlusses der Verpackung darin, daß zwischen der Stummelklappe und dem an ihr anliegenden Bodenteil ein die beiden Teile fest miteinander verbindender, jedoch lösbarer Klebe- oder Haftverschluß ausgebildet ist. Zu diesem Zweck besteht eine sehr vorteilhafte Gestaltung des Klebeverschlusses darin, daß er ein an der Stummelklappe ausgebildetes perforiertes, vorzugsweise nur an der Decklage eines Wellenmaterials wie insbesondere Wellpappe vorgesehenes perforiertes Feld umfaßt, das mittels einer Leimraupe mit dem Bodenteil verbunden ist. Ein derartiges perforiertes Feld bildet eine Decklagen- oder Papierausrißbegrenzung. Gegebenenfalls ist es sehr zweckmäßig, derartige mit Stummelklappen-Feldern fluchtende Perforationsfelder auch deckungsgleich an dem Bodenteil vorzusehen. Bei erfindungsgemäßen Verpackungen mit an dem Bodenabschnitt angeordneten Stummelklappen ist vorteilhaft erreicht, daß der gebildete Verwenderverschluß ausschließlich an der Unterseite der Verpackung vorgesehen ist. Er ist mit einem Handgriff leicht zu öffnen, wobei das Bodenteil seitlich frei von irgendwelchen Haft- oder Klebestellen bleibt, so daß das Erscheinungsbild der nach Öffnen der Verpackung vorliegenden Regal- oder Displayverpackung noch nicht einmal durch gelöste Perforationsfelder gestört ist.

Die erfindungsgemäßen Ausführungsformen aus Wellpappe-Zuschnitteilen mit zwei Paaren einander gegenüberliegender Seitenwände und doppellagiger Eckklappen-Verpackungswand mit insbesondere kreuzenden Wellen können zweckmäßig als Gefahrgutverpackungen genutzt werden, die eine besonders ausgeprägte Stapelstauchfestigkeit aufweisen. Die Stabilität dieser erfindungsgemäßen Verpackungen ist insbesondere durch zwischen den Deckelwandteilen und den Eckklappen angeordnete Leimraupen vorzugsweise eines Schmelzklebers erhöht.

Die Ausführungsform der erfindungsgemäßen Verpackung mit seitlich an der Deckelteil-Seitenwand angelenkten Stum mel- bzw. Verschlußklappen erlaubt in besonderer Gestaltung eine vollkommen ohne Klebe- oder Haftmittel bauende Verpackung, die manuell zusammengefügt und geöffnet werden kann. Diese erfindungsgemäße Ausführungsform ist dadurch erreicht, daß das Bodenteil mittels Laschen und Ausnehmungen als Trayelement ausgebildet ist, das einen umlaufenden Rand aufweist, der an zwei einander gegenüberliegenden Seiten durch mittels Lasche und Bodenausnehmung arretierte Krempelwände gebildet ist, wobei seitliche, Stecklaschen der beiden anderen einander gegenüberliegenden Rand-Seitenwände aufnehmende Schlitze der Krempelwände zugleich derart angeordnet und ausgebildet sind, daß sie in fester aber lösbarer Steckverbindung eine Stummelklappe aufnehmen.

Weitere Einzelheiten, Zweckmäßigkeiten und Vorteile der Erfindung gehen aus der folgenden Beschreibung der in der schematischen Zeichnung dargestellten Ausführungsbeispiele hervor. In der Zeichnung zeigt

Fig. 1 ein aus einem Deckelzuschnitt entstehendes Deckelteil einer erfindungsgemäßen Verpackung,

Fig. 2 ein aus einem Bodenzuschnitt entstehendes Bodenteil einer erfindungsgemäßen Verpackung,

Fig. 3 eine aus den Teilen gemäß Fig. 1 und 2 gebildete, nahezu im fertig zusammengefügten Zustand befindliche Verpackung,

Fig. 4 die Innenansicht eines Deckelzuschnitts einer erfindungsgemäßen Verpackung,

Fig. 5 einen Bodenzuschnitt zur Bildung einer Verpackung mit dem Deckelzuschnitt gemäß Fig. 4,

Fig. 6 einen Deckelzuschnitt und ein daraus entstehendes Deckelteil einer erfindungsgemäßen Verpackung,

Fig. 7 einen Bodenzuschnitt und ein damit gebildetes Krempelwand-Bodenteil zum Zusammenfügen mit dem Deckelteil gemäß Fig. 6 zu der in Fig. 8 gezeigten erfindungsgemäßen, nahezu im fertig zusammengefügten Zustand befindlichen Verpackung.

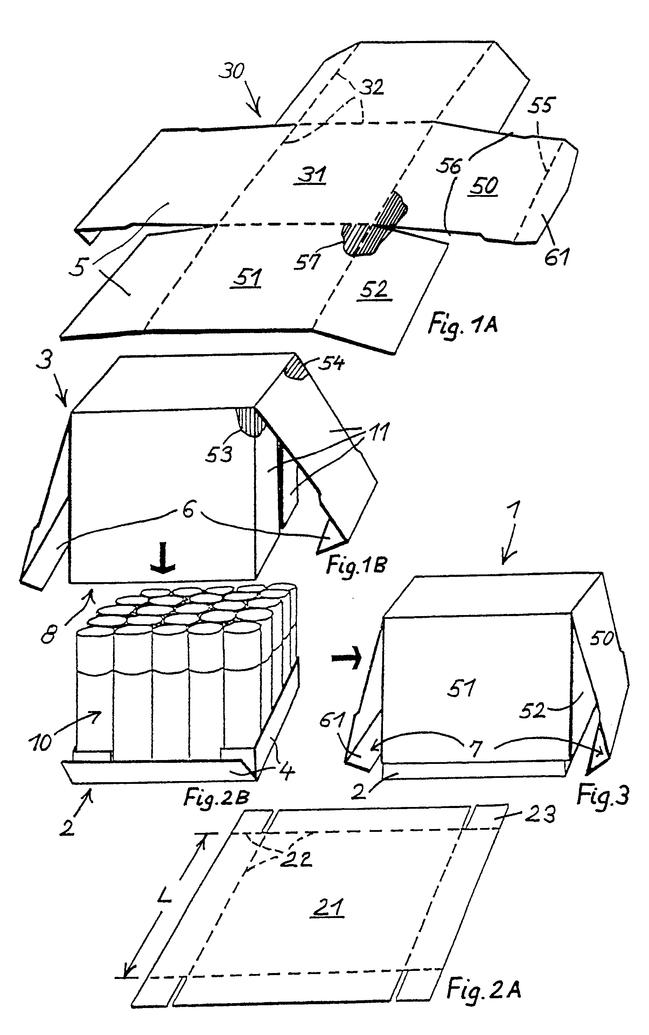

Eine erfindungsgemäße Verpackung 1 ist aus einem zweiteiligen Bausatz zusammenfügbar, wie dies in Fig. 1 bis 3 gezeigt ist. Aus einem ein Stanzschnittformat bildenden Flächenelement in Form eines Deckelzuschnitts 30 aus Wellpappe ist ein quaderförmiges Deckelteil 3 aufgerichtet. Der Deckelzuschnitt 30 umfaßt einen rechteckförmigen Deckelabschnitt 31, an dessen vier Kanten über Falzlinien 32 einander gegenüberliegende Längs- und Breitseiten 5 angelenkt sind, die paarweise als Deckelseitenwände 50 bzw. 51 einander gegenüberliegen und im aufgefalteten Zustand die Quaderkontur der Verpackung 1 bestimmen. Der Wellenverlauf 57 des Zuschnitts 30 erstreckt sich über die längsseitigen Deckelseitenwände 50.

An den breitseitigen Deckelseitenwänden 51 sind in den Eckbereichen des Zuschnitts 30 über Falzlinien 32 Deckeleckklappen 52 angelenkt. Entlang der freien Längsränder der Deckelseitenwände 50 sind über Falzlinien 55 Verschlußklappen 6 bildende Stummelklappen 61 angelenkt.

Ein Bodenteil 2 der Verpackung 1 ist aus einem rechtecigen Bodenzuschnitt 20 aufgerichtet, der aus einem Wellpappe-Flächenstanzteil besteht. Dieses umfaßt Bodenseitenwände 4, die einen umlaufenden Rand bilden und an einen rechteckigen Bodenabschnitt 21 über Falzlinien 22 angelenkt sind. An ein Paar einander gegenüberliegender Bodenseitenwände 4 sind über Falzlinien 22 Ecklaschen 23 angelenkt, die als Klebelaschen dienen, um die Seitenwände 4 miteinander zu verbinden. Damit ist das Bodenteil 2 nach Art eines Trays ausgebildet, das, wie in Fig. 2B gezeigt, zu verpakkendes Gut 10 wie Dosen od.dgl. Teile stehend aufnimmt.

Das Bodenteil 2 ist als Einsatzteil ausgebildet, das an der Öffnungsseite 8 des Deckelteils 3 formschlüssig in dieses eingepaßt ist (Fig. 3). Dabei liegen die Außenflächen der Bodenseitenwände 4 satt von innen an dem durch die Deckelseitenwände 51 und die Deckeleckklappen 52 gebildeten Öffnungsrand des Deckelteils 3 an. Die Stummelklappen 61 sind gegenüber jeder Deckelseitenwand 50 rechtwinklig eingeklappt, so daß sie von unten an dem Bodenabschnitt 21 anliegen, und für dieses eine streifen-, rand- oder leistenförmige Winkel- oder Kanteneinfassung 7 bilden. Durch ein Klebe- oder Haftmittel zwischen den Stummelklappen 61 und der Außenfläche des Bodenabschnitts 21 sind das Bodenteil 2 und das Deckelteil 3 fest miteinander verbindbar.

Wie aus Fig. 1B und 3 ersichtlich, bildet die Deckelseitenwand 50 zusammen mit den Deckeleckklappen 52 eine doppellagige Verpackungswand 11, wobei diese Wand aufgrund ihrer Schichtstruktur mit stehender Welle 53 der Deckeleckklappen 52 und liegender Welle 54 der Deckelseitenwand 50 eine besonders große Trägfahigkeit, Stapelstauchfestigkeit und Verwindungssteifigkeit gewährleistende Stabilität aufweist, die besonders ausgeprägt dadurch erreicht ist, daß die Deckeleckklappen 52 mit der anliegenden Deckelseitenwand 50 durch Leimraupen verklebt ist.

Der Deckelzuschnitt 30 gemäß Fig. 1A ist an den seitlichen Rändern der Deckelseitenwände 50 mit seitlichen Kantenausnehmungen 56 versehen, so daß die Flächenbreite der Seitenwände 50 etwas geringer als die des Deckelabschnitts 31 ist. Damit sind vorteilhaft überstehende Rän der der Seitenwände 50 an den Ecken der Verpackung 1 vermieden.

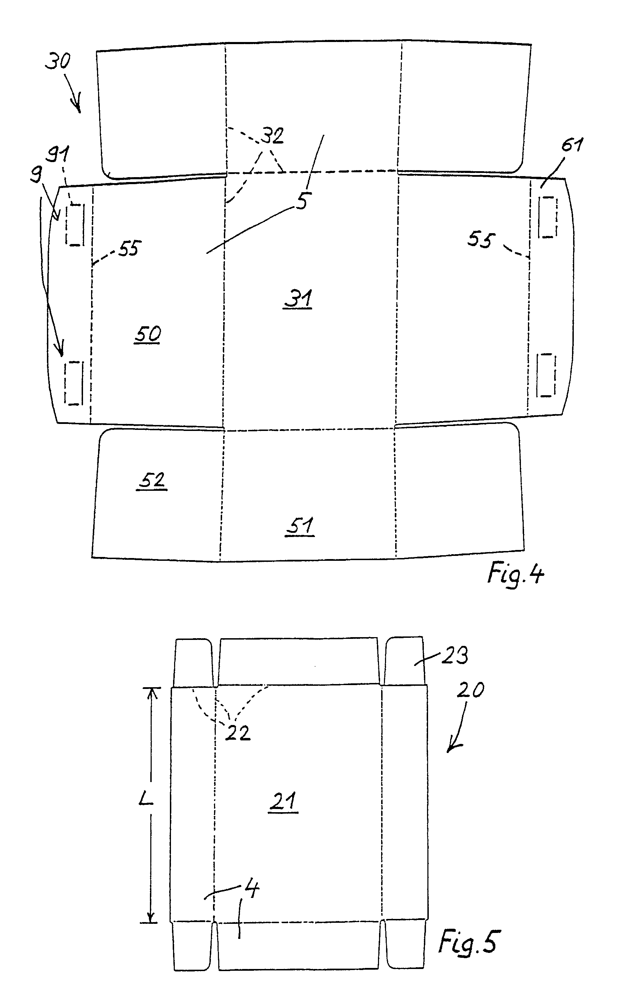

Fig. 4 und 5 zeigen einen Deckelzuschnitt 30 und einen Bodenzuschnitt 20, die vorteilhaft für eine Verpackung der in Fig. 3 gezeigten Art vorgesehen sind. Die beiden einander gegenüberliegenden Deckelseitenwände 50 verjungen sich nach außen, d.h. zu der Deckelöffnungsseite hin, während sich die beiden anderen Deckelseitenwände 51 nach außen erweitern. Die Deckeleckklappen 52 sind mit ihren freigeschnittenen Rändern parallel zu der anlenkenden Falzlinie 32 bzw. zu dem seitlichen Rand der benachbarten Deckelseitenwand 50 zugeschnitten. Damit ist ein leicht pyramidenförmiges Deckelteil mit trapezförmigen Seitenwänden erreicht, wobei die Fläche des Deckelabschnitts 31 geringfügig kleiner als die entsprechende Fläche des Bodenabschnitts 21 ist. Die innere Kantenhöhe der Verpackung, d.h. die lichte Weite zwischen dem Bodenabschnitt 21 und dem Deckelabschnitt 31 ist im wesentlichen gleich der Standhöhe des zu verpackenden Füllgutes. Aufgrund dieser Anpassung und der sich nach oben verengenden Ausbildung des Deckelteils wird das Füllgut im Bereich des Deckelabschnitts spielfrei umkantet.

Die als Verschlußlaschen 6 ausgebildeten Stummelklappen 61 sind mit seitlich angeordneten und längs mit ihnen ausgerichteten perforierten Feldern 91 versehen. Diese sind Bestandteil eines Klebeverschlusses 9, der einen von dem Perforationsfeld umgrenzten, die Stummelklappe mit dem außenseitigen Bodenabschnitt 21 verbindenden Leimauftrag umfaßt. Vorzugsweise ist das Perforationsfeld 91 lediglich in die innenseitige Decklage des aus Wellpappe bestehenden Deckelzuschnitts 30 gestanzt.

Erfindungsgemäße Verpackungen mit Zuschnitten 20 und 30 gemäß Fig. 1 bis 5 sind insbesondere als Gefahrgutverpackungen vorgesehen, die als das Füllgut umfassende Versandeinheiten besonders günstig in einem maschinellen Verfahren in Serienproduktion hergestellt werden. Die einzelnen Schritte eines solchen Abpackverfahrens gehen in einem vollautomatischen Prozeß vonstatten. Der vorzugsweise aus Wellpappe (B-, E-Welle od.dgl.) bestehende Bodenzuschnitt 20 wird maschinell zu dem Tray-Bodenteil 2 aufgerichtet und an den Ecken verleimt, wobei das Füllgut 10 gleichzeitig oder später zugeführt wird. Dabei besteht vorteilhaft die Möglichkeit, über die Längsseite L angelenkte Arretierungsformate vorzusehen und zu verkleben. Auf dem Füllgut 10 des Tray-Bodenteils 2 wird ein Wellpappe-Deckelzuschnitt 30 (B-, E-Welle od.dgl.) abgelegt. Die Deckelseitenwände 51 (Breitseiten) werden nach unten gegen die Trayaußenseite gefaltet. Zugleich werden die an den Breitseiten 51 angelenkten Deckeleckklappen 52 eingeklappt, so daß sie mit ihren bodenseitigen Rändern ebenfalls außen an den Wänden 4 des Trays 2 zu liegen kommen. Auf die Eckklappen 52 und - im Bereich der Einfassung 7 - auf die Unterseite des Bodenabschnitts 21 werden Leimraupen aufgespritzt. Die Deckelseitenwände 50 (Längswände) sowie die Stummelklappen 61 werden um 90$^{\circ}$ oder nahezu rechtwinklig eingefaltet, und letztere werden mit den Leimraupen des Bodenabschnitts 21 verpreßt. Insbesondere sind die Bodenleimraupen in Länge und Position so bemessen und vorgesehen, daß sie innerhalb perforierter Felder 91 (Fig. 4) zu liegen kommen. Bei geringerer Stabilitätsanforderung an die Verpackung entfällt der Leimauftrag zwischen den Deckeleckklappen 52 und den Deckelseitenwänden 50.

Anhand der Fig. 5 bis 8 ist eine erfindungsgemäße Verpackung beschrieben, die in Form eines aus Zuschnitteilen 30 und 20 bestehenden Bausatzes vollkommen ohne Klebe- oder Haftmittel manuell zusammenfügbar ist.

Ein zu einem quaderförmigen Deckelteil 3 aufrichtbarer Wellpappe-Deckelzuschnitt 30 umfaßt einen rechteckförmigen Deckelabschnitt 31, an dessen vier Kanten über Falzlinien 32 jeweils einander gegenüberliegende Längsseiten und Breitseiten angelenkt sind. An die die Breitseiten bildenden Deckelseitenwände 51 sind in den Eckenbereichen über Falzlinien 32 Deckeleckklappen 52 angelenkt. Die Längsseiten sind als Deckelseitenwände 50 vorgesehen, an die im Bereich der Öffnungsseite 8 des Deckelteils 3 jeweils über Falzlinien 55 in die Eckbereiche ragende, Verschlußklappen 6 bildende Stummelklappen 62 angelenkt sind. Durch Aufrichten der Deckelseitenwände 51, Einfalten der Dek-

keleckklappen 52 und Aufrichten der Deckelseitenwände 50 um jeweils ca. 90° erhält man das in Fig. 6B und 8 in der Entstehung dargestellte Dek-kelteil 3.

Der in Fig. 7A dargestellte Wellpappe-Zuschnitt 20 dient zur Aubildung eines in Fig. 7B im Endzustand gezeigten Bodenteils 2. Der Bodenzuschnitt 20 ist durch einen rechteckigen Bodenabschnitt 21 bestimmt, der von je zwei Breitseitenrändern 41 und Längsseitenrändern 47 zur Ausbildung von Tray-Seitenwänden 4 umgeben ist. Diese Rander sind von dem Bodenabschnitt 21 durch Falzlinien 22 abgegrenzt und dadurch auffaltbar. An den Breitseitenrändern 41 ist, durch entsprechende Falzlinien 22 faltbar, jeweils ein Krempelrand 42 angeordnet, der beim Aufrichten des Bodenteils 2 in die in Fig. 7B gezeigte Form nach innen umgeschlagen wird. Dabei sind zwischen dem Breitseitenrand 41 und dem Krempelrand 42 zu den Ecken offene Schlitze 46 gebildet, in die Stecklaschen 43 eingreifen, die im Zuschnitt 20 in Verlängerung der Längsseitenränder 47 vorgesehen und gegen die Breitseitenränder 41 durch Schnittlinien getrennt sind. Um eine für die Zwecke der Erfindung geeignete Breite des Schlitzes 46 zu bilden, ist die Falzung zwischen den beiden Teilen 41, 42 als doppelte Falzlinie mit einem Abstand ausgebildet, der etwa der Materialstärke von zusammen dem Deckelzuschnitt 30 und dem Bodenzuschnitt 20 entspricht. Der um die aufgefalteten Stecklaschen 43 eingekrempelte Krempelrand 42 wird mittels an seinen freien Rändern vorgesehener Nasen oder Laschen 44 in in dem entsprechenden Randbereich des Bodenabschnitts 21 vorgesehenen Ausnehmungen 45 verankert. Durch die dem Material Wellpappe innewohnenden Rückstellkräfte erhält man eine genügende Selbsthemmung und Veran-kerungskraft aufweisende, sehr stabile Krempel-wand 40. Der Wellenverlauf im Zuschnitt 20 ist bei 48 angedeutet. So erhält das Bodenteil 2 im Bereich der Krempelwände 40 eine hohe Stabilität auf Druck senkrecht zu dem Bodenabschnitt 21.

Der Deckelzuschnitt 30 bzw. das Deckelteil 3 ist so dimensioniert und in Anpassung auf das Bodenteil 2 vorgesehen, daß die Deckelseitenwände 51 und die Deckeleckklappen 52 im Bereich der Deckelteil-Öffnungsseite 8 an den Innenseiten der Bodenteil-Seitenwände 4 satt anliegen und mit ihren Kanten auf dem Bodenabschnitt 21 aufstehen. Dabei gelangen die Stummelklappen 62 der Deckel-Längsseitenwände 50 vor die Schlitze 46 des Tray-Bodenteils 2, wie aus Fig. 8 ersichtlich. Die fertig montierte Verpackung 1 ist dadurch erreicht, daß die Stummelklappen 62 in die Schlitze 46 gesteckt sind. Dabei befinden sie sich im satten Klemmsitz jeweils zwischen der Stecklasche 43 und der Breitseitenwand 41 des Bodenteils 2. Die Längsseitenränder 47 des Bodenteils 2 sind zwischen die Deckeleckklappen 52 und die Deckelseitenwände 50 geklemmt. Im übrigen bilden die Dek-keleckklappen 52 und die Deckelseitenwand 50 eine in den Überlappungsbereichen doppellagige Verpackungswand 11, die bei dem Zuschnitt gemäß Fig. 6A mit parallel zu den Längsseiten 50 verlaufender Welle 57 mit stehender Welle der Deckelklappen 52 und liegender Welle der Deckelseitenwände 50 sehr stabil ausgebildet ist. Die freien Längskanten der Deckelseitenwände 50 schließen mit der Fläche des Bodenabschnitts 21 ab.

Jedes Paar 6 der Stummel-/Verschlußklappen 62 an jeder Deckelseitenwand 50 bildet zusammen mit der Deckelseitenwand 50 eine Winkel- oder Kanteneinfassung 7 für das Bodenteil 2. Die seitlichen Schnittkanten 58 bzw. die in ihrer Verlängerung jeweils vorgesehene Falzlinie 55 der Stummelklappe 62 sind parallel zu den die Deckelseitenwände 51 anlenkenden Falzlinien 32 zu den Breitseiten des Deckelzuschnitts 30 bzw. des Deckelteils 3 hin geringfügig versetzt (Fig. 6A), so daß jeweils ein Rand 59 gebildet ist (Fig. 8), der eine bequeme Handhabe bildet, um die Deckelseitenwand 50 mit ihrer Stummelklappe 62 aus der Arretierungsposition zu befreien, d.h. um die Stummelklappen 62 zum Öffnen der Verpackung 1 aus den Schlitzen 46 herauszuführen, wobei die Deckelseitenwände 50 flügelartig um die sie anlenkenden Falzlinien 32 nach außen geschwenkt werden.

Es sei darauf hingewiesen, daß zwar im Zusammenhang mit dem Bodenteil im Zuge dieser Beschreibung und Ansprüche stets speziell auf die Verwendung von Trays hingewiesen wurde, jedoch ist dieser Begriff nicht beschränkend zu verstehen. Selbstverständlich kann es sich dabei um jede für die angegebenen Zwecke geeignete Art von Bo-denelementen handeln, die Verpackungsgut auf-nehmen können, also z.B. auch um Steigen. Solche Bodenteile können ggf. auch mit Lochplatten oder Arretierungsformaten zur lagesicheren Anordnung des Verpackungsguts darin versehen sein.

**Bezugszeichenliste**

1 Verpackung
10 Verpackungsgut
11 doppellagige Verpackungswand
2 Bodenteil
20 Bodenzuschnitt
21 Bodenabschnitt
22 Falzlinien
23 Ecklasche
3 Deckelteil
30 Deckelzuschnitt
31 Deckelabschnitt

32 Falzlinien
4 Bodenseitenwände
40 Krempelwand
41 Breitseitenrand
42 Krempelrand
43 Stecklasche
44 Lasche
45 Bodenausnehmung
46 Schlitz
47 Längsseitenrand
48 Wellenverlauf
5 Deckelseitenwände
50 Deckelseitenwand mit Stummelklappe
51 Deckelseitenwand ohne Stummelklappe
52 Deckeleckklappe
53 stehende Welle
54 liegende Welle
55 Falzlinie
56 Kantenausnehmungen
57 Wellenverlauf
58 Kanten
59 Rand
6 Verschlußklappe
61 Stummelklappe
62 Stummelklappe
7 Einfassung
8 Öffnungsseite
9 Klebeverschluß
91 perforiertes Feld

## Ansprüche

1. Quaderförmige Verpackung aus faltbarem Material wie Wellpappe, Pappe od.dgl. zum Verpacken von zu einer Versandeinheit zusammengefaßtem Einzelgut, wobei die Verpackung aus einem Bodenteil und aus einem durch das Bodenteil an einer Öffnungsseite im satten Sitz geschlossenen Deckelteil zusammengefügt ist, von denen das Bodenteil aus einem aufgerichteten Bodenzuschnitt mit an einem Bodenabschnitt über Falzlinien angelenkten Seitenwänden sowie mit diese verbindenden Ecklaschen und das Deckelteil aus einem zu einem kastenförmigen Teil aufgerichteten Deckelzuschnitt mit an einem Deckelabschnitt über Falzlinien angelenkten Seitenwänden bestehen, **dadurch gekennzeichnet,** daß das Bodenteil (2) als das Einzelgut (10) aufnehmender Einsatz in Form eines Trays od. dgl. ausgebildet ist und daß an der das Bodenteil (2) aufnehmenden Öffnungsseite (8) des Deckelteils (3) an einander gegenüberliegenden Seitenwänden (50) des Deckelzuschnitts (30) über Falzlinien (55) Verschlußklappen bildende Stummelklappen (6) angelenkt sind, die unter Anlage an dem Bodenteil (2) eine das Bodenteil (2) zwischen sich aufnehmende Einfassung (7) bilden.

2. Verpackung nach Anspruch 1, **dadurch ge-** **kennzeichnet,** daß der Deckelzuschnitt (30) zwei Paar einander gegenüberliegender Seitenwände (50,51) umfaßt.

3. Verpackung nach Anspruch 2, **dadurch gekennzeichnet,** daß zwei einander gegenüberliegende, die Stummelklappen (6) anlenkende Deckelseitenwände (50) zu dem Bodenteil (2) hin sich verjüngend ausgebildet sind, während die bei den anderen Deckelseitenwände (51) zu dem Bodenteil (2) hin sich verbreiternd ausgebildet sind.

4. Verpackung nach einem der Ansprüche 1 bis 3, **dadurch gekennzeichnet,** daß in Eckbereichen des Deckelzuschnitts (30) an wenigstens einer Deckelseitenwand (5) über Falzlinien (32) Eckklappen (52) angelenkt sind.

5. Verpackung nach Anspruch 4, **dadurch gekennzeichnet,** daß der Deckelzuschnitt (30) Eckklappen (52) umfaßt, die zusammen mit den die Stummelklappen (6) anlenkenden Deckelseitenwänden (50) eine doppellagige Verpackungswand (11) bilden.

6. Verpackung nach Anspruch 5, **dadurch gekennzeichnet,** daß die doppellagige Verpackungswand (11) bei einem eine einzige Wellenrichtung aufweisenden Deckelzuschnitt (30) aus Wellenmaterial durch Eckklappen (52) mit stehender Welle (53) und einer die Stummelklappe (6) anlenkenden Seitenwand (50) mit liegender Welle (54) gebildet ist.

7. Verpackung nach einem der Ansprüche 2 bis 6, **dadurch gekennzeichnet,** daß frei von Stummelklappen ausgebildete Deckelteil-Seitenwände (51) und/oder gegebenenfalls vorgesehene Deckelteil-Eckklappen (52) an der Innenseite der Bodenteil-Seitenwände (4) satt anliegen und auf dem Bodenabschnitt (21) wenigstens teilweise aufstehen.

8. Verpackung nach einem der Ansprüche 2 bis 6, **dadurch gekennzeichnet,** daß frei von Stummelklappen ausgebildete Deckelteil-Seitenwände (51) und/oder gegebenenfalls vorgesehene Deckelteil-Eckklappen (52) an der Außenseite der Bodenteil-Seitenwände (4) satt anliegen.

9. Verpackung nach einem der Ansprüche 1 bis 8, **dadurch gekennzeichnet,** daß die Stummelklappen-Einfassung (7) für das Bodenteil (2) dadurch ausgebildet ist, daß die Stummelklappen (6) längs des Randes (55) der das Bodenteil (2) aufnehmenden Deckelteil-Öffnungsseite (8) angelenkt sind, wobei das Deckelteil (3) das Bodenteil (2) im Bereich der Öffnungsseite (8) übergreift und die Stummelklappen (61) außen an dem Bodenabschnitt (21) des Bodenteils (2) anliegen.

10. Verpackung nach einem der Anspruch 1 bis 8, **dadurch gekennzeichnet,** daß die Stummelklappen-Einfassung (7) für das Bodenteil (2) dadurch ausgebildet ist, daß jede Stummelklappe (62) im Bereich der Deckelteil-Öffnungsseite (8) seitlich an der Deckelteil-Seitenwand (50) angelenkt ist und an der Seitenwand (4) des Bodenteils (2) anliegt, wobei die die Stummelklappen (62) anlenkenden Deckelteil-Seitenwände (50) außen an der Seitenwand (4) des Bodenteils (2) anliegen.

11. Verpackung nach einem der Ansprüche 1 bis 10, **dadurch gekennzeichnet,** daß zwischen der Stummelklappe (6) und dem an ihr anliegenden Bodenteil (2) ein die beiden Teile fest miteinander verbindender, jedoch lösbarer Klebe- oder Haftverschluß ausgebildet ist.

12. Verpackung nach Anspruch 11, **dadurch gekennzeichnet,** daß ein Klebeverschluß (9) ein an der Stummelklappe (61) ausgebildetes perforiertes Feld (91) umfaßt, das mittels einer Leimraupe mit dem Bodenteil (2) verbunden ist.

13. Verpackung nach Anspruch 10, **dadurch gekennzeichnet,** daß das Bodenteil (2) mittels Laschen (43,44) und Ausnehmungen (45,46) frei von Haft- oder Klebemitteln als Trayelement ausgebildet ist, das einen umlaufenden Rand aufweist, der an zwei einander gegenüberliegenden Seiten durch mittels Lasche (44) und Bodenausnehmung (45) arretierte Krempelwände (40) gebildet ist, wobei seitliche, Stecklaschen (43) der beiden anderen einander gegenüberliegenden Rand-Seitenwände (4) aufnehmende Schlitze (46) der Krempelwände (40) zugleich derart angeordnet und ausgebildet sind, daß sie in fester aber lösbarer Steckverbindung eine Stummelklappe (62) aufnehmen.

Fig. 1A

Fig. 1B

Fig. 2B

Fig. 2A

Fig. 3

Fig.4

Fig.5

EP 90 30 5144

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 108 459 (FACCO IMPIANTI AVICOLI SRL) * Page 1, lines 89-104; figure 2 * | 1,2,4 | B 65 G 21/06 B 65 G 21/00 |
| A | | 5 | |
| X | US-A-3 825 108 (STONE) * Column 2, lines 31-42; figure 2 * | 1,2,4 | |
| A | | 3,5,6,9 | |
| X | FR-A-1 201 830 (FISHER & LUDLOW LTD) * Page 2, right-hand column, lines 16-22; figure 1 * | 1 | |
| X | PATENT ABSTRACTS OF JAPAN, vol. 10. no. 246 (M-510)[2302], 23rd August 1986; & JP-A-61 75 714 (SHIBUYA KOGYO CO., LTD) 18-04-1986 | 1,2,4 | |
| A | IDEM | 3,5,6,9 | |
| A | GB-A-2 167 371 (A.B. SKF) * Page 1, lines 115-119; figure 2 * | 1 | TECHNICAL FIELDS SEARCHED (Int. Cl.5) |
| A | EP-A-0 017 637 (BULTEN-KANTHAL A.B.) * Page 1, line 29 - page 2, line 14; figure 2 * | 1 | B 65 G |

The present search report has been drawn up for all claims

| Place of search | Date of completion of the search | Examiner |
|---|---|---|
| THE HAGUE | 15-10-1990 | BEERNAERT J.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)